# EUROPEAN PATENT SPECIFICATION

(11) **EP 2 328 376 B1**
(45) Date of publication and mention of the grant of the patent: **14.10.2015**
(21) Application number: 08876916.1
(22) Date of filing: 22.12.2008
(51) Int. Cl.: H04W 36/00

(54) **HANDOVER METHOD AND MOBILE STATION**
HANDOVER-VERFAHREN UND MOBILSTATION
PROCÉDÉ DE TRANSFERT ET STATION MOBILE

(30) Priority: 10.09.2008 CN 200810212882
(43) Date of publication of application: 01.06.2011
(73) Proprietor: ZTE Corporation, Shenzhen, Guangdong 518057 (CN)
(72) Inventor: LIU, Yang, Guangdong 518057 (CN); JIANG, Hui, Guangdong 518057 (CN); QU, Hongyun, Guangdong 518057 (CN)
(74) Representative: Bongiovanni, Simone
(86) International application number: PCT/CN2008/073640
(87) International publication number: WO 2010/028528

(56) References cited:
- WO-A1-2008/049028
- CN-C- 1 224 292
- US-A- 5 920 818
- US-A1- 2007 021 119
- US-A1- 2008 188 223
- Yung-Han Chen et al.: "Handover Issues in IEEE 802.16m/e Co-existing Systems", , vol. IEEE C802.16m-08/586r4 15 July 2008 (2008-07-15), pages 1-10, XP002719740, Retrieved from the Internet: URL:http://wirelessman.org/tgm/contrib/C80 216m-08_586r4.pdf [retrieved on 2014-02-03]
- ZEXIAN LI ET AL: "802.16m solution to the legacy support", IP.COM JOURNAL, IP.COM INC., WEST HENRIETTA, NY, US, 6 February 2008 (2008-02-06), XP013123757, ISSN: 1533-0001
- KANCHEI (KEN) LOA ET AL: "IEEE802.16m Relay Frame Structure", IEEE802.16 BROADBAND WIRELESS ACCESS WORKING GROUP,, no. 258, 1 April 2008 (2008-04-01), pages 1-8, XP002515258,

## Description

### Field of the Invention

The present invention relates to communication field, and in particular to a handover method and a mobile station.

### Background of the Invention

At present, wireless communication system utilizes electromagnetic wave and fixed or mobile wireless communication terminals (for example, either mobile wireless phones or laptops with a wireless communication card can be called a terminal) to communicate. Generally, during wireless communication, a terminal is located in the wireless coverage of the system, and communicates with the system via a wireless communication channel. The wireless communication channel divides electromagnetic wave frequency into a plurality of carrier frequencies, each of which is one wireless communication channel. The wireless communication system provides wireless coverage in a certain geographic region, referred to as a cell, with a designed wireless channel by a Base Station (BS). Generally speaking, theoretically, the BS shall be located in the center of the cell. In order to expand the coverage or increase the capacity, one or more relay stations can be provided between terminals and the BS. For a mobile station, the relay station functions as a BS. When a terminal travels from one cell to another one, handover will be conducted to keep the communication.

In related art, the handover technology can be classified into hard handover and soft handover; wherein the hard handover is characterized by first interrupting the connection with the original serving station and then establishing a service connection with the target station. The process for the hard handover may comprise the following sub-process: 1) network topology acquisition (cell re-selection); 2) handover preparation and initialization; 3) the target station downlink synchronization; and 4) terminating the connection with the original serving station and entering a new cell.

Due to the rapid development of communication technology, there are various types of communication systems, which are compatible with the traditional terminals. As such, the current terminals can also access to the traditional stations (support the BSs and relay stations of old communication protocols). Currently, in the technology concerning the compatibility, the frame structure zone of the advanced stations (supporting the BSs or relay stations of new communication protocols) is divided into an advanced zone and a legacy zone. The current terminal can operate in the advanced zone or the legacy zone, while the traditional terminal can only operate in the legacy zone. For a traditional terminal, the legacy zone of the advanced station is one traditional station. In addition, when the current terminal accesses to the traditional station, at the point of view of the traditional station, the terminal is one traditional terminal.

Currently, in related art, the process of the current terminal handing over from the traditional station to the advanced station comprises two steps: the first step, in which the current terminal hands over from the traditional station to the legacy zone of the advanced station; and the second step, in which the current terminal switches from the legacy zone of the advanced station to the advanced zone of the advanced station. The above process enables the air interface protocol of the traditional station not to change, however, that increases delay of handover. Therefore a new method is needed to solve the problem.

Document by Yung-Han Che et al., "Handover Issues in IEEE 802.16m/e Co-existing Systems", vol. IEEE C802.16m-08/586r4, 15 July 2008, pages 1-10, discloses a handover method which is used for a mobile station handing over from a serving station to a target zone of a target station.

Document by Zexian Li et al., "802.16m solution to the legacy support", IP.COM JOURNAL, IP.COM INC., WEST HENRIETTA, NY, 6 February 2008, US - ISSN 1533-0001 discloses a radio interface for IEEE 802.16m and IEEE 802.16e systems, and which further contributes to the ITU-R as a radio technology for IMT-Advanced.

### Summary of the Invention

Considering that when the mobile station hands over from the serving station to the target station, there is an over long delay, thus one object of the present invention is to provide a handover method and a mobile station, so as to solve above problem in related art.

According to one aspect of the present invention, there is provided a handover method according to claim 1, which is used for a mobile station handing over from a serving station to the target zone of the target station.

The handover method according to the present invention comprises: the mobile station handing over from the serving station to a legacy zone of a frame structure of the target station, and sending a first ranging request message in the legacy zone; the mobile station receiving a first ranging request response message, and acquiring relevant information of the target zone carried in the first ranging request response message; and the mobile station switching to the target zone according to the relevant information.

In addition, before the mobile station sending the first ranging request message in the legacy zone, the method further comprises: acquiring an uplink parameter after the synchronization between the mobile station and the legacy zone, and sending a first initial ranging code, wherein, in the case that the first ranging code is a random ranging code, a random access method is employed to send the random ranging code; and the mobile station receiving a initial ranging response information.

In addition, before the mobile station sending the first ranging request message in the legacy zone, the method further comprises: the mobile station sending a first initial ranging code on a pre-allocated ranging resource after the synchronization between the mobile station and the legacy zone, wherein in the case that the first initial ranging code is a specified ranging code, a random access method is employed to send the random ranging code; in the case that the first initial ranging code is a random ranging code, a method of transmission on specified time slot is employed to send the random ranging code; and in the case that the first initial ranging code is the specified ranging code, the method of transmission on the specified time slot is employed to send the specified ranging code; and the mobile station receiving the initial ranging response information.

In the above, the process that the mobile station sends the first ranging request information in the legacy zone is embodied as: the mobile station sending the first ranging request message on the pre-allocated resource in the legacy zone; or the mobile station sending the first ranging request message according to the initial ranging response information.

In the above, the relevant information of the target zone comprises at least one of the following: ranging resource information of the target zone, connection information of the target zone, and parameter information of the target zone.

In the above, the ranging resource information of the target zone is a competitive ranging resource or a non-competitive ranging resource.

In the above, the ranging resource information of the target zone comprises at least one of the following: time parameter(s), frequency parameter(s), sub-channel parameter(s), a base station identifier, preamble parameter(s), a handover identifier of the target zone, and ranging code parameter(s).

In the above, the connection information of the target zone comprises at least one of the following: an identifier of the mobile station in the target zone, and connection identifier(s), data corresponding to each connection identifier, and pre-allocated basic connection identifier(s) of the mobile station in the target zone.

In the above, the parameter information of the target zone comprises at least one of the following: handover mode, handover operation mode, resource retaining identifier, handover indication allocation identifier, handover optimization guiding information, network assistant handover support information, and serve level prediction information.

In addition, after the mobile station switches to the target zone according to the relevant information, the method further comprises: the mobile station sending a second ranging request message to the target zone.

In addition, before the mobile station sends the second ranging request message to the target zone, the method further comprises: the mobile station sending the second initial ranging code on ranging resource pre-allocated by an association operation after the synchronization between the mobile station and the target zone, wherein in the case that the second initial ranging code is a random ranging code, a random access method is employed to send the random ranging code; in the case that the second initial ranging code is a specified ranging code, the random access method is employed to send the specified ranging code; in the case that the second initial ranging code is the random ranging code, a method of transmission on specified time slot is employed to send the random ranging code; and in the case that the second initial ranging code is the specified ranging code, the method of transmission on the specified time slot is employed to send the specified ranging code; and the mobile station receiving the initial ranging response information.

In the above, the process that the mobile station sends the second ranging request message to the target zone is embodied as: the mobile station sending the second ranging request message on the pre-allocated resource in the target zone; or the mobile station sending the second ranging request message according to adjusted initial ranging response information.

In addition, after the mobile station sends the second ranging request message to the target zone, the method further comprises: the mobile station receiving the ranging response message, and acquiring at least one of ranging resource information, adjustment parameters, and success indication of initial ranging in the ranging response message.

In the above, the mobile station is a mobile station supporting both old communication protocol and new communication protocol, the serving station is a base station or relay station supporting the old communication protocol, and the target station is a base station or relay station supporting both old communication protocol and new communication protocol, wherein the legacy zone of the target station utilizes the old communication protocol to provide service for the mobile station supporting the old communication protocol, and the target zone of the target station supports the new communication protocol.

According to another aspect of the present invention, there is provided a mobile station according to claim 15 which is configured to be handed over from a serving station to a target zone of a frame structure of a target station.

The mobile station according to the present invention comprises: a first handover module, configured to make the mobile station hand over from the serving station to a legacy zone of a frame structure of the target station; a sending module , configured to send a first ranging request message to the legacy zone; a receiving module, configured to receive a first ranging request response message, and acquire relevant information of the target zone carried in the first ranging request response message; and a second handover module, configured to make the mobile station switch to the target zone according to the relevant information.

By the technical solution of the present invention, the mobile station acquires relevant information of the target zone carried in the ranging request response message in the legacy zone of the target station, and switches to the target zone according to the acquired relevant information, thus unnecessary procedures in the two handover processes can be reduced and the handover efficiency of the compatible communication system can be enhanced.

Other features and advantages of the present invention will be detailed in the description, and partly obvious from the description, or can be understood through implementing the present invention. The purposes and other advantages can be achieved and obtained through the structure specified by the specification, claims and drawings.

### Brief Description of the Drawings

Drawings are provided for the further understanding of the present invention and form a part of the specification, which are used to explain the present invention with embodiments of the present invention rather than limit the present invention, wherein,
Fig. 1 is the flow chart of the handover method according to the embodiment of the present invention;
Fig.2 is the flow chart of Example 1 according to embodiments of the present invention;
Fig.3 is the signaling flow chart of the detailed process in Example 1 according to embodiments of the present invention;
Fig.4 is the flow chart of Example 2 according to embodiments of the present invention;
Fig.5 is the signaling flow chart of the detailed process in Example 2 according to embodiments of the present invention;
Fig.6 is the block diagram of the mobile station according to embodiments of the present invention.

### Detailed Description of the Embodiments

### Functionality Overview

Currently, in related technology, when a terminal hands over from a legacy station to an advanced station, there is a relatively long handover delay; when the terminal hands over to the legacy zone, it is not required to fully complete the handover process in the legacy zone because it is not required to transmit data in the legacy zone, and the terminal accesses to the advanced zone as soon as possible so as to shorten the handover delay. Therefore, the present invention provides a solution comprising: after the mobile station hands over from the serving station to the legacy zone of the target station, a ranging request message is transmitted in the legacy zone of the target station; after the mobile station receives a ranging request response message, it acquires relevant information of the target zone carried in the ranging request response message, and the mobile station switches to the target zone.

It is to be noted that, above mobile station is a mobile station supporting old communication protocol and new communication protocol, the serving station is a base station or relay station supporting the old communication protocol, the target station is a base station or relay station supporting the old communication protocol and the new communication protocol, wherein the legacy zone of the target station employs the old communication protocol to provide service for the mobile station supporting the old communication protocol, and the target zone of the target station supports the new communication protocol.

The preferred embodiments of the present invention will be described in connection with drawings. It is to be understood that the preferred embodiments described herein are intended to illustrate and explain the present invention, rather than to limit thereof.

### Method Embodiments

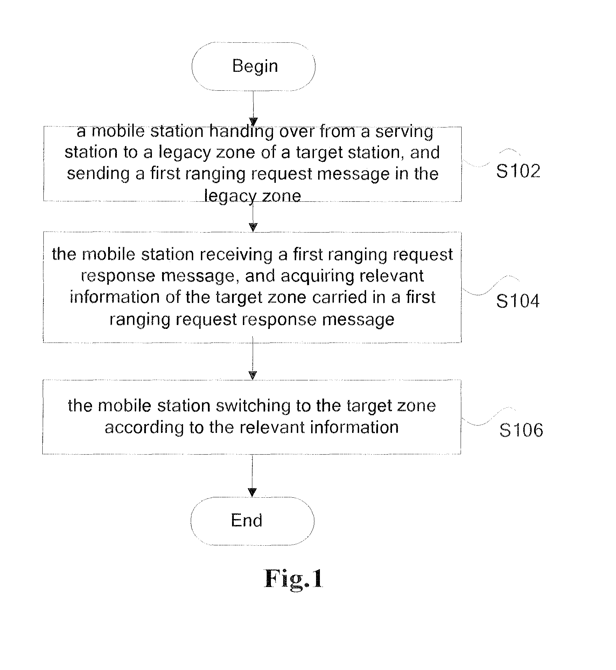

According to embodiments of the present invention, there is provided a handover method, which is used for a mobile station handing over from a serving station to a target zone of a target station. Fig. 1 is the flow chart of the handover method according to the embodiment of the present invention, as shown in Fig.1, which comprises the following processes.

step S102, the mobile station hands over from the serving station to the legacy zone of the target station, and sends a ranging request message in the legacy zone; when sending the ranging request message, the mobile station may send the ranging request message on the pre-allocated resource of the legacy zone, and send the ranging request message according to the initial ranging response information.

It is to be noted that before step S 102, the mobile station needs to perform an initial ranging firstly, wherein the initial ranging have two methods, hereinafter, the two methods will be explained in detail.

### Method 1

Firstly, an uplink parameter is acquired after the synchronization between the mobile station and the legacy zone, and an initial ranging code is sent, and in the case that the initial ranging code is a random ranging code, a random access method is employed to send the random ranging code.

Secondly, the mobile station receives initial ranging response information, wherein the initial ranging response information at least comprises: using the received ranging code as the identifier fed back to the mobile station, using the relative or absolute value of the parameter as the indication of adjustment.

### Method 2

Firstly, the mobile station sends a initial ranging code on a pre-allocated ranging resource after the synchronization between the mobile station and the legacy zone, wherein in the case that the initial ranging code is a specified ranging code, the random access method is employed to send the random ranging code; in the case that the initial ranging code is a random ranging code, the method of transmission on a specified time slot is employed to send the random ranging code; in the case that the initial ranging code is a specified ranging code, the method of transmission on the specified time slot is employed to send the specified ranging code.

Secondly, the mobile station receives the initial ranging response information, wherein the initial ranging response information at least comprises: the received ranging code is considered as the identifier fed back to the mobile station, the parameter relative or absolute value is considered as the indication of adjustment.

It can be seen from above two methods that the mobile station may send the initial ranging code after acquiring the uplink parameter, or send the initial ranging code on the ranging resource allocated by the association operation. It is to be noted that after the mobile station initiates a scan request of the mobile station, the scan request response message of the mobile station which is received by the mobile station contains the indication on whether the target zone ranging is performed during the scan period and the indication of the ranging response method, wherein such ranging is defined as the association operation in the 16e standard.

Step S 104, the mobile station receives the ranging request response message and acquires relevant information of the target zone carried in the ranging request response message, wherein, the relevant information of the target zone comprises: ranging resource information of the target zone, connection information of the target zone, and parameter information of the target zone; hereinafter, the above mentioned information will be described in detail.
1, the ranging resource information of the target zone is a competitive ranging resource or a non-competitive ranging resource, and at least comprises: a time parameter, a frequency parameter, a sub-channel parameter, a base station identifier, a preamble parameter, a handover identifier of the target zone, and a ranging code parameter.
2, the connection information of the target zone at least comprises: an identifier of the mobile station in the target zone, a connection identifier of the mobile station in the target zone, data corresponding to each connection identifier, and a pre-allocated basic connection identifier of the mobile station in the target zone.
3, the parameter information in the target zone at least comprises: handover mode, handover operation mode, resource retaining identifier, handover indication allocation identifier, handover optimization indication information, network assistant handover support information, and serving level predication information.

Step S 106, the mobile station switches to the target zone according to the relevant information.

After the step S106, the above method further comprises:
1, the mobile station sending the initial ranging code on ranging resource pre-allocated by an association operation after the synchronization between the mobile station and the target zone, wherein in the case that the initial ranging code is a random ranging code, a random access method is employed to send the random ranging code; in the case that the initial ranging code is a specified ranging code, the random access method is employed to send the random ranging code; in the case that the initial ranging code is the random ranging code, a method of transmission on specified time slot is employed to send the random ranging code; in the case that the initial ranging code is a specified ranging code, the method of transmission on the specified time slot is employed to send the specified ranging code.
2, the mobile station receives the initial ranging response information, wherein the initial ranging response information at least comprises: using the received ranging code as the identifier fed back to the mobile station, using the relative or absolute value of the parameter as the indication of adjustment.

Moreover, after the initial ranging, the mobile station further needs to perform the following processes.
1, the mobile station sends the ranging request to the target zone. When sending the ranging request, the mobile station may send the ranging request message on the resource pre-allocated in the target zone, or send the ranging request message according to adjusted initial ranging response information.
2, the mobile station receives the ranging response message and acquires at least one of ranging resource information, adjustment parameter, and success indication of the initial ranging in the ranging response message.

Above technical solution will be illuminated in detail in connection with drawings and taking a World Interoperability for Microwave Access (WiMAX) system as an example.

WiMAX is a Broadband Wireless Access Metropolitan Area Network based on IEEE802.16, whose basic purpose is to ensure the interconnection and interoperability among wireless equipments of different manufactures in the circumstance of accessing to a metropolitan area network, and is mainly used for providing one last mile high speed broadband access and future personal mobile communication service for home, enterprise, and mobile communication networks. Standard IEEE802.16 defines the specification for physical layer (PHY) and Medium Access Control layer (MAC), and is directed to a new air interface standard provided for microwave frequency band; wherein, IEEE802.16m comprised thereof for relay structure is currently the newest standard technology and established on the basis of IEEE802.16e and IEEE802.16j.

### Example 1

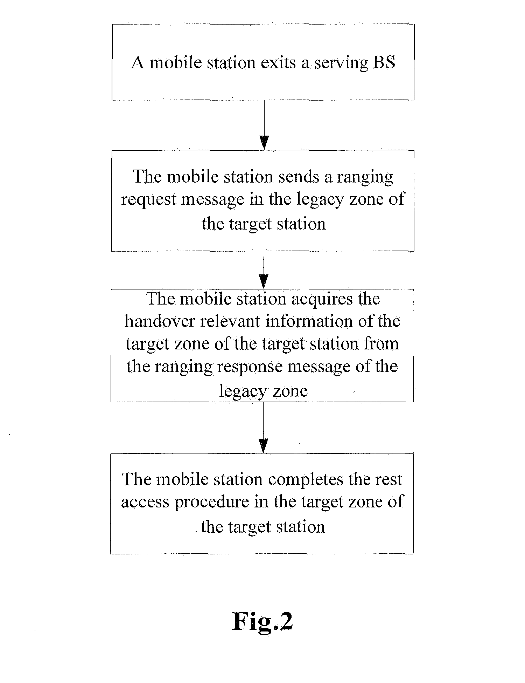

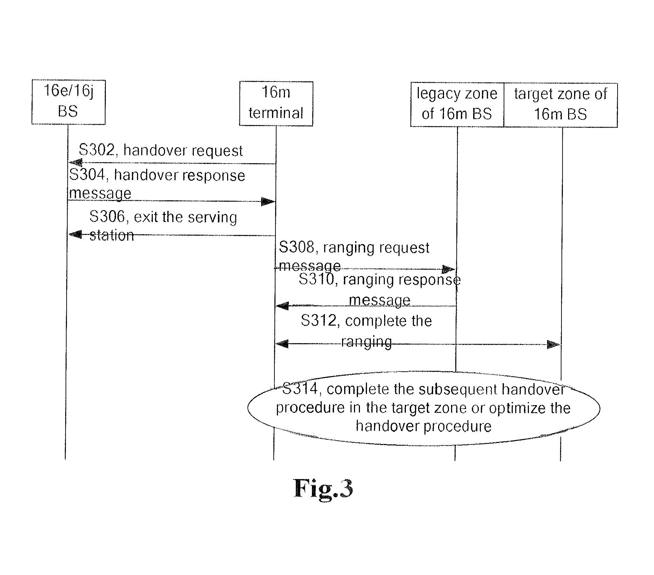

In the example, 16m BS is the target station, while 16e or 16j BS is the serving BS, and 16m terminal is a mobile station. In current related arts, the 16m frame structure zone is divided into a legacy zone and a target zone (16m zone). Fig.2 is the flow chart according to the Example 1 of embodiments of the present invention, as shown in Fig.2, which comprises the following processes: the 16m terminal disconnecting with the 16e/16j BS and handing over from 16e/16j BS to the fast ranging IE of the legacy zone of the 16m BS frame structure zone; after completing the handover, the 16m terminal sending the initial ranging request message; receiving the ranging response information of the legacy zone of the 16m BS frame structure zone; acquiring the relevant information of the target zone and handing over to the 16m zone of the 16m BS frame according to the relevant information of the target zone, and performing the subsequent access process. Above technical solution will be explained in detail in connection with Fig.3 as below.

Fig.3 is the signaling flow chart of Example 1 according to embodiments of the present invention. As shown in Fig.3, the process procedure comprises the following steps.

Step S302, the 16m terminal initiates a handover request (MOB_MSHO-REQ).

In practical application, when the 16m terminal determines to handover from the 16e/16j BS to the legacy zone of a 16m BS, the 16m terminal may make the determination on its own and notify the determination to the 16e/16j BS; or the 16e/16j BS may make the determination and notify the determination to the 16m terminal, wherein the 16m terminal decide on its own to utilize a message containing one or more handover target stations to notify the 16e/16j BS; the 16e/16j BS makes the determination and notifies the 16m terminal with the message containing one or more handover target stations, and the 16m terminal utilizes the message containing one or more handover target stations to return a feedback.

In addition, the 16m terminal may also cancel the handover from the 16e/16j BS to the legacy zone of a 16m BS, the 16m terminal makes the determination on its own and notifies the determination to the 16e/16j BS; or the 16e/16j BS makes the determination and notifies the determination to the 16m terminal, wherein the 16m terminal decide on its own to utilize a message containing a handover cancellation indication to notify the 16e/16j BS; the 16e/16j BS makes the determination and notifies the 16m terminal with the message containing the handover cancellation indication; and the 16m terminal returns a feedback.

Step S304, the 16e/16j BS sends a handover response message (MOB_BSHO_RSP) to the 16m terminal, wherein the response message comprises the resource for sending the handover request message (RNG_REQ) by the 16m BS.

Step S306, the 16m terminal notifies the 16e/16j BS to exit the serving station (MOB_HO-IND) and enter the target station, and the 16m BS begins to send the handover request message and complete the subsequent network access procedure.

The 16m terminal needs to acquire the channel information of the legacy zone of the 16m BS from the 16e/16j BS after the 16m terminal hands over from the 16e/16j BS to the legacy zone of the 16m BS frame structure zone; wherein, the broadcast message of the 16e/16j BS is a Downlink Channel Description (DCD) message or a neighboring cell broadcast(MOB-NBR_ADV) message of the 16m terminal, moreover, above DCD message comprises the type length value (TLV) coding compatible with the channel information of the neighboring cell.

In addition, the 16m terminal may perform a direct scan operation on the legacy zone of the 16m BS, and the scan on the 16m terminal can be initiated by the 16m terminal or by responding to the request from the 16e/16j BS; wherein the scan can be a periodical scan or a non-periodical scan. After the 16m terminal scans the legacy zone of the 16m BS, the 16m terminal may acquire the channel information of the legacy zone of the 16m BS from the broadcast message of the legacy zone of the 16m BS, wherein, above broadcast message is a DCD message, moreover above DCD message comprises the TLV coding compatible with the channel information of the neighboring cell. After acquiring the channel information, the 16m terminal reports the acquired channel information to the 16e/16j BS.

In addition, the 16m terminal may also perform an association operation. Wherein, the association operation performed by the 16m terminal may comprise sending a ranging code to the legacy zone of the 16m BS under the instruction by the 16e/16j BS, and the 16m BS sending a ranging response containing the adjustment information in the legacy zone or sending feedback to the 16e/16j BS via the transmitting ranging of the core network, then unicasting or broadcasting to the 16m terminal by the 16e/16j BS.

When the 16m terminal terminates the connection with the 16e/16j BS, the 16m terminal sends a message containing a connection termination indication to the 16e/16j BS. After receiving the message, the 16e/16j BS initiates a timer; upon the timer expiration, the 16e/16j BS releases all resources connected with the 16m terminal; and before the timer expiration, the 16e/16j BS cancels the timer if it receives a message containing a handover cancellation indication.

Step S308, the 16m terminal sends the ranging request message (RNG-REQ) in the Fast Ranging IE of the legacy zone.

Step S310, the 16m terminal acquires the ranging response information of the 16m zone of the 16m BS from the ranging response (RNG-RSP) message of the 16m BS, wherein, the 16m terminal acquires the ranging resource information of the 16m zone of the 16m BS or the connection information of the 16m zone or other parameters from the ranging response message.

In the above, the ranging resource information of the 16m zone of the 16m BS comprises a competitive or non-competitive ranging resource, and the received ranging code is used as the identifier fed back to a certain mobile station, or the relative value or absolute value of a parameter is used as an adjustment indication; moreover, the ranging resource information of the 16m zone of 16m BS comprises: a time parameter, a frequency parameter or a sub-channel parameter, a BS identifier, a preamble parameter, the handover identifier of the target zone ; the connection information comprises identifier or the connection identifier of the mobile station in the 16m zone, the data corresponding to each connection identifier, the pre-allocated basic connection identifier; and other parameters comprise: handover mode, handover operation mode, resource retaining identifier, handover indication allocation identifier, handover optimization indication, network assistant handover support, serving level prediction.

Step S312, the ranging is completed in the 16m zone of the 16m BS, wherein the ranging can be the initial ranging, or sending a ranging request message, so as to denoting that the 16m BS has successfully accessed to the 16m zone.

Step S314, the subsequent general handover procedure is completed, wherein the procedure can be a completed access procedure or an optimized access procedure.

In the above, the subsequent handover procedure comprises, but not limits to the following steps.

Step 1, the process that 16m terminal accesses to the 16m zone of the 16m BS comprises basic capability negotiation, the 16m terminal sending basic capability report message, and 16m BS sending a feedback message in the 16m zone station.

Step 2, the process that 16m terminal accesses to the 16m zone of the 16m BS comprises authentication, the 16m terminal sending an authentication request message, and the 16m BS sending a feedback message in the 16m zone.

Step 3, the process that 16m terminal accesses to the 16m zone of the 16m BS comprises registration, the 16m terminal sending a registration request message, and the 16m BS sending a feedback message in the 16m zone.

Step 4, the process that 16m terminal accesses to the 16m zone of the 16m BS comprises establishing a connection, the 16m BS sending a connection establishing request message, and the 16m terminal sending a connection establishing response message.

It is to be noted that an optimized procedure may omit one or more of above steps, and an optimized access procedure may omit one or more of above steps.

### Example 2

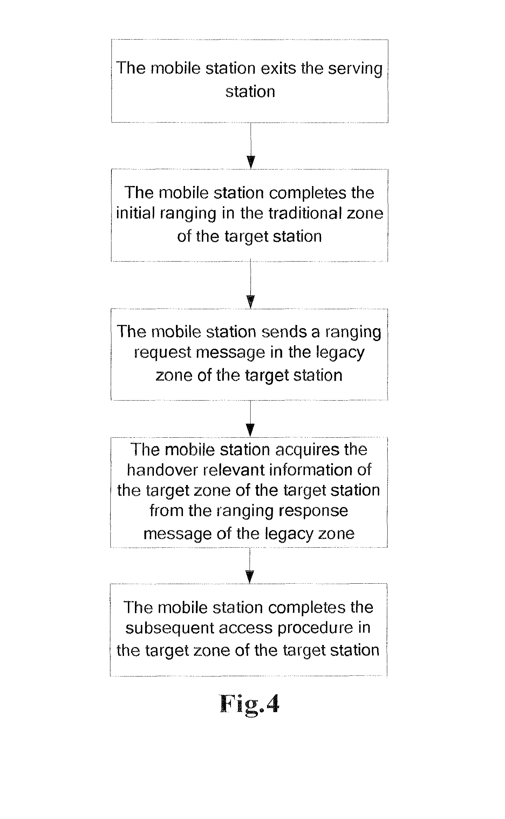

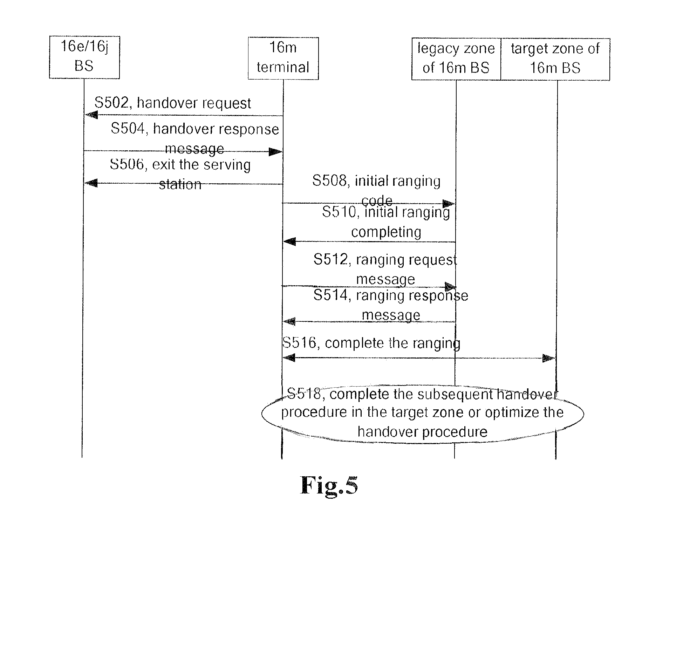

In the example, 16m BS is a target station, while 16e or 16j BS is a serving BS, and 16m terminal is a mobile station. In current related arts, the 16m frame structure zone may be divided into a legacy zone and a target zone. Fig.4 is the flow chart of the Example 2 according to embodiments of the present invention, as shown in Fig.4, which comprises the following processes: the 16m terminal disconnecting with the 16e/16j BS and handing over from the 16e/16j BS to the legacy zone of the 16m BS frame structure zone; after completing the handover, the 16m terminal sending a initial ranging code; sending a ranging request message after initial ranging by the 16m terminal is successful; performing the subsequent access process after switching to the 16m zone in the 16m BS frame according to the ranging response information of the legacy zone in the 16m BS frame. Above processes will be explained in detail in connection with Fig. 5 as below.

Fig. 5 is the signaling flow chart of Example 2 according to embodiments of the present invention. As shown in Fig. 5, the process procedure comprises the following steps.

Step S502, the 16m terminal initiates a handover request (MOB_MSHO_REQ).

In practical application, when the 16m terminal determines to hand over from the 16e/16j BS to the legacy zone of a 16m BS, the 16m terminal may make the determination itself and notify the determination to the 16e/16j BS; or the 16e/16j BS may make the determination and notify the determination to the 16m terminal, wherein the 16m terminal decide on its own to utilize a message containing one or more handover target stations to notify the 16e/16j BS; the 16e/16j BS makes the determination and notifies the 16m terminal with the message containing one or more handover target stations, and the 16m terminal utilizes the message containing one or more handover target stations to return a feedback.

In addition, the 16m terminal may also cancel the handover from the 16e/16j BS to the legacy zone of a 16m BS, the 16m terminal makes the determination on its own and notifies the determination to the 16e/16j BS; or the 16e/16j BS makes the determination and notifies the determination to the 16m terminal, wherein the 16m terminal itself decide to utilize a message containing a handover cancellation indication to notify the 16e/16j BS; the 16e/16j BS makes the determination and notifies the 16m terminal with the message containing the handover cancellation indication; and the 16m terminal returns a feedback.

Step S504, the 16e/16j BS sends a handover response message (MOB_BSHO_RSP) to the 16m terminal.

Step S506, the 16m terminal notifies the 16e/16j BS to exit the serving station (MOB_HO-IND) and enter the target station, and the 16m BS begins the initial access.

The 16m terminal needs to acquire the channel information of the legacy zone of the 16m BS from the 16e/16j BS after the 16m terminal hands over from the 16e/16j BS to the legacy zone of the 16m BS frame structure zone; wherein, the broadcast message of the 16e/16j BS is a DCD message or a neighboring cell broadcast(MOB-NBR_ADV) message of the 16m terminal, moreover, above DCD message comprises the TLV coding compatible with the channel information of the neighboring cell.

In addition, the 16m terminal may perform a direct scan operation on the legacy zone of the 16m BS, and the scan on the 16m terminal can be initiated by the 16m terminal or by responding to the request from the 16e/16j BS; wherein the scan can be a periodical scan or a non-periodical scan. After the 16m terminal scans the legacy zone of the 16m BS, the 16m terminal may acquire the channel information of the legacy zone of the 16m BS from the broadcast message of the legacy zone of the 16m BS, wherein, above broadcast message is a DCD message, moreover above DCD message comprises the TLV coding compatible with the channel information of the neighboring cell. After acquiring the channel information, the 16m terminal reports the acquired channel information to the 16e/16j BS.

In addition, the 16m terminal may also perform an association operation, wherein, the association operation by the 16m terminal may comprise sending a ranging code to the legacy zone of the 16m BS under the instruction by the 16e/16j BS, and the 16m BS sending a ranging response containing the adjustment information in the legacy zone or sending feedback to the 16e/16j BS via the transmitting ranging of the core network, then unicasting or broadcasting to the 16m terminal by the 16e/16j BS.

When the 16m terminal terminates the connection with the 16e/16j BS, the 16m terminal sends a message containing a connection termination indication to the 16e/16j BS. After receiving the message, the 16e/16j BS initiates a timer; upon the timer expiration, the 16e/16e BS releases all resources connected with the 16m terminal; and before the timer expiration, the 16e/16j BS cancels the timer if it receives a message containing a handover cancellation indication.

Step S508, after synchronizing with the legacy zone of the 16m BS, the 16m terminal can acquire the uplink parameter, send the ranging code and adjust the uplink parameter according to the feedback in the legacy zone by the 16m BS, wherein, the process that the 16m terminal sends the ranging code comprises that: the random ranging code is sent by using the random access method; or after synchronizing with the legacy zone of the 16m BS, the 16m terminal sends the ranging code on the ranging resource allocated by the association operation, and adjusts the uplink parameter according to the feedback in the legacy zone by the 16m BS; wherein, the process that the 16m terminal sends the ranging code in the ranging resource allocated by the association operation comprises: sending random ranging code by using random access method, sending specified ranging code by using the random access method, sending the random ranging code in specified time slot, and sending the specified ranging code in the specified time slot.

In the above, the ranging response information of the legacy zone of the 16m BS utilizes the received ranging code as the identifier fed back to a certain mobile station, using the relative value or the absolute value of the parameter as the adjustment indication.

Step S510, the 16m terminal acquires the resource information of the ranging request message sent by the 16m zone of the 16m BS from the ranging response (RNG-RSP) message contained the initial ranging success indication of the legacy zone of the 16m BS, and the resource information of the 16m zone of above 16m BS utilizes the received ranging code as the identifier fed back to a certain mobile station.

Step S512, after the initial ranging is completed in the legacy zone, the 16m terminal sends ranging request message (RNG-REQ) and acquires the ranging response information of the 16m zone of the 16m BS from the ranging response message (RNG-RSP) of the 16m BS. The ranging and other subsequent procedure of network access in traditional technology are completed in the 16m zone of the 16m BS.

Step S514, the 16m terminal acquires the ranging response information of the 16m zone of the 16m BS from the ranging response (RNG-RSP) message of the 16m BS, wherein, the 16m terminal acquires the ranging resource information of the 16m zone of the 16m BS or the connection information of the 16m zone or other parameters from the ranging response message.

In the above, the ranging resource information of the 16m zone of the 16m BS comprises a competitive or non-competitive ranging resource, and the received ranging code is considered as the identifier fed back to a certain mobile station, or the relative value or absolute value of a parameter is used as an adjustment indication; moreover, the ranging resource information of the 16m zone of 16m BS comprises: a time parameter, a frequency parameter or a sub-channel parameter, a BS identifier, a preamble parameter, the handover identifier of the target zone; the connection information comprises identifier or the connection identifier of the mobile station in the 16m zone, the data corresponding to each connection identifier, the pre-allocated basic connection identifier; and above other parameters comprise: handover mode, handover operation mode, resource retaining identifier, handover indication allocation identifier, handover optimization indication, network assistant handover support, serving level prediction.

Step S516, the 16m terminal sends a ranging request message to the 16m target zone or performs the initial ranging, which is aimed to indicate the 16m terminal has successfully accessed to the 16m zone. The subsequent procedure can be a completed access procedure or an optimized access procedure.

Step S518, the subsequent handover procedure comprises, but not limits to the following steps, and the optimized procedure may omit one or more of the steps.

Step 1, the process that 16m terminal accesses to the 16m zone of the 16m BS comprises basic capability negotiation, the 16m terminal sending basic capability report message, and 16m BS sending a feedback message in the 16m zone station.

Step 2, the process that 16m terminal accesses to the 16m zone of the 16m BS comprises authentication, the 16m terminal sending an authentication request message, and the 16m BS sending a feedback message in the 16m zone.

Step 3, the process that 16m terminal accesses to the 16m zone of the 16m BS comprises registration, the 16m terminal sending a registration request message, and the 16m BS sending a feedback message in the 16m zone.

Step 4, the process that 16m terminal accesses to the 16m zone of the 16m BS comprises establishing a connection, the 16m BS sending a connection establishing request message, and the 16m terminal sending a connection establishing response message.

### Device embodiments

According to embodiments of the present invention, there is provided a mobile station, which is configured to handover from a serving station to a target zone of a target station, which can be used to realize the handover method provided in above method embodiments.

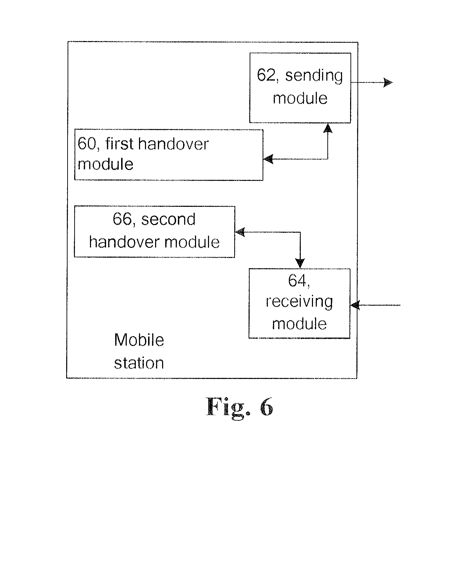

Fig.6 is the block diagram of the mobile station according to embodiments of the present invention, as shown in Fig.6, the mobile station comprise a first handover module 60, a sending module 62, a receiving module 64, a second handover module 66.

In particular, the first handover module 60 is configured to make the mobile station hand over from the serving station to a legacy zone of the target station.

The sending module 62, connected to the first handover module 60, is configured to send a ranging request message in the legacy zone after the first handover module 60 hands over the mobile station to the legacy zone; when sending the ranging request message, the sending module 62 may send the ranging request message on the resource pre-allocated by the legacy zone, and send the ranging request message according to the initial ranging response information.

A receiving module 64, is configured to receive a ranging request response message and acquire the relevant information of the target zone carried in the ranging request response message; wherein, the relevant information of the target zone particularly comprises: the ranging resource information of the target zone, the connection information of the target zone, the parameter information of the target zone; hereinafter, the above mentioned information will be described in detail.
1, the ranging resource information of the target zone is a competitive ranging resource or non-competitive ranging resource, moreover, the ranging resource information of the target zone at least comprises: a time parameter, a frequency parameter, a sub-channel parameter, a base station identifier, a preamble parameter, a handover identifier of the target zone, and a ranging code parameter.
2, the connection information of the target zone at least comprises: an identifier of the mobile station in the target zone, a connection identifier, data corresponding to each connection identifier, and a pre-allocated basic connection identifier of the mobile station in the target zone.
3, the parameter information of the target zone at least comprises: handover mode, handover operation mode, resource retaining identifier, handover indication allocation identifier, handover optimization indication information, network assistant handover support information, and serve level prediction information.

The second handover module 66, connected to the receiving module 64, is configured to make the mobile station switch to the target zone according to the relevant information received by the receiving module 64.

During a particular implementation, the processes shown in Figs. 1-5 can be realized by the mobile station provided by embodiments according to the present invention, which will not be described tautologically herein.

By the technical solution of the present invention, the mobile station acquires the target zone relevant information contained in the ranging request response message in the legacy zone of the target station, and switches to the target zone according to the acquired relevant information, thus unnecessary procedures in the two handover processes can be reduced and the handover efficiency of the compatible communication system can be enhanced.

Obviously, those skilled in the art shall understand that individual modules and steps of the present invention can be implemented with general computation devices integrated together or distributed in the network formed by a plurality of computation devices, alternatively implemented with program codes executable by computation devices, which can be stored in memory devices for execution by the computation devices, or implemented with ICs, or several modules or steps can be implemented with a single IC. Thus, the present invention is not limited to any particular hardware and software combination.

Above description is to illustrate the preferred embodiments not limit the present invention. Various alterations and changes to the present invention are apparent to those skilled in the art.

## Claims

1. A handover method, which is used for a mobile station handing over from a serving station to a target zone of a frame structure of a target station, **characterized in that** the handover method comprises:
the mobile station handing over (S102; S302) from the serving station to a legacy zone of a frame structure of the target station, and sending (S102; S308) a first ranging request message in the legacy zone;
the mobile station receiving (S104; S310) a first ranging request response message, and acquiring relevant information of the target zone carried in the first ranging request response message; and
the mobile station switching (S106; S312) to the target zone according to the relevant information.

2. The method according to claim 1, **characterized in that**, before the mobile station sending (S102; S308) the first ranging request message in the legacy zone, the method further comprises:
acquiring (S508) an uplink parameter after the synchronization between the mobile station and the legacy zone, and sending a first initial ranging code, wherein, in the case that the first ranging code is a random ranging code, a random access method is employed to send the random ranging code; and
the mobile station receiving (S510) a initial ranging response information.

3. The method according to claim 1, **characterized in that**, before the mobile station sending (S102; S308) the first ranging request message in the legacy zone, the method further comprises:
the mobile station sending a first initial ranging code on a pre-allocated ranging resource after the synchronization between the mobile station and the legacy zone, wherein in the case that the first initial ranging code is a specified ranging code, a random access method is employed to send a random ranging code; in the case that the first initial ranging code is a random ranging code, a method of transmission on specified time slot is employed to send the random ranging code; and in the case that the first initial ranging code is the specified ranging code, the method of transmission on the specified time slot is employed to send the specified ranging code; and
the mobile station receiving an initial ranging response information.

4. The method according to claim 2 or 3, **characterized in that**, the process that the mobile station sends the first ranging request information in the legacy zone is embodied as:
the mobile station sending the first ranging request message on the pre-allocated resource in the legacy zone; or the mobile station sending the first ranging request message according to the initial ranging response information.

5. The method according to claim 1, **characterized in that**, the relevant information of the target zone comprises at least one of the following:
ranging resource information of the target zone, connection information of the target zone, and parameter information of the target zone.

6. The method according to claim 5, **characterized in that**, the ranging resource information of the target zone is a competitive ranging resource or a non-competitive ranging resource.

7. The method according to claim 5, **characterized in that**, the ranging resource information of the target zone comprises at least one of the following:
a time parameter, a frequency parameter, a sub-channel parameter, a base station identifier, a preamble parameter, a handover identifier of the target zone, and a ranging code parameter.

8. The method according to claim 5, **characterized in that**, the connection information of the target zone comprises at least one of the following:
an identifier of the mobile station in the target zone, a connection identifier, data corresponding to each connection identifier, and a pre-allocated basic connection identifier of the mobile station in the target zone.

9. The method according to claim 5, **characterized in that**, the parameter information of the target zone comprises at least one of the following:
handover mode, handover operation mode, resource retaining identifier, handover indication allocation identifier, handover optimization indication information, network assistant handover support information, and serve level prediction information.

10. The method according to claim 1, **characterized in that**, after the mobile station switches to the target zone according to the relevant information, the method further comprises:
the mobile station sending a second ranging request message to the target zone.

11. The method according to claim 10, **characterized in that**, before the mobile station sends the second ranging request message to the target zone, the method further comprises:
the mobile station sending a second initial ranging code on ranging resource pre-allocated by an association operation after the synchronization between the mobile station and the target zone, wherein in the case that the second initial ranging code is a random ranging code, a random access method is employed to send the random ranging code; in the case that the second initial ranging code is a specified ranging code, the random access method is employed to send the specified ranging code; in the case that the second initial ranging code is the random ranging code, a method of transmission on specified time slot is employed to send the random ranging code; and in the case that the second initial ranging code is the specified ranging code, the method of transmission on the specified time slot is employed to send the specified ranging code; and
the mobile station receiving an initial ranging response information.

12. The method according to claim 11, **characterized in that**, the process that the mobile station sends the second ranging request message to the target zone is embodied as:
the mobile station sending the second ranging request message on the pre-allocated resource in the target zone; or
the mobile station sending the second ranging request message according to adjusted initial ranging response information.

13. The method according to claim 12, **characterized in that**, after the mobile station sends the second ranging request message to the target zone, the method further comprises:
the mobile station receiving the ranging response message, and acquiring at least one of ranging resource information, adjustment parameters, and success indication of initial ranging in the ranging response message.

14. The method according to claim 1, **characterized in that**, the mobile station is a mobile station supporting both old communication protocol and new communication protocol, the serving station is a base station or relay station supporting the old communication protocol, and the target station is a base station or relay station supporting both old communication protocol and new communication protocol, wherein the legacy zone of the target station utilizes the old communication protocol to provide service for the mobile station supporting the old communication protocol, and the target zone of the target station supports the new communication protocol.

15. A mobile station, which is configured to be handed over from a serving station to a target zone of a frame structure of a target station, **characterized in that** the mobile station comprises:
a first handover module (60), configured to make the mobile station hand over from the serving station to a legacy zone of a frame structure of the target station;
a sending module (62), configured to send a first ranging request message to the legacy zone;
a receiving module (64), configured to receive a first ranging request response message, and acquire relevant information of the target zone carried in the first ranging request response message; and
a second handover module (66), configured to make the mobile station switch to the target zone according to the relevant information.

## Patentansprüche

1. Handover-Verfahren, das für eine Mobilstation verwendet wird, das von einer betreuenden Station an eine Zielzone einer Rahmenstruktur einer Zielstation übergibt, **dadurch gekennzeichnet, dass** das Handover-Verfahren umfasst:
Übergeben (S102; S302) einer Rahmenstruktur der Zielstation von der betreuenden Station an eine Altsystemzone und Senden (S102; S308) einer ersten Ortungsanforderungsnachricht in der Altsystemzone durch die Mobilstation;
Empfangen (S104; S310) einer ersten Ortungsantwortnachricht und Erfassen relevanter Informationen der Zielzone, die in der ersten Ortungsantwortnachricht befördert werden, durch die Mobilstation; und
gemäß den relevanten Informationen Umschalten (S106; S312) auf die Zielzone durch die Mobilstation.

2. Verfahren nach Anspruch 1, **dadurch gekennzeichnet, dass** das Verfahren vor dem Senden (S102; S302) der ersten Ortungsanforderungsnachricht in der Altsystemzone durch die Mobilstation ferner umfasst:
Erfassen (S508) eines Uplink-Parameters nach der Synchronisation zwischen der Mobilstation und der Altsystemzone und Senden eines ersten anfänglichen Ortungscodes, wobei in dem Fall, in dem der erste Ortungscode ein zufälliger Ortungscode ist, ein Direktzugriffsverfahren verwendet wird, um den zufälligen Ortungscode zu senden; und
Empfangen (S510) einer anfänglichen Ortungsantwortinformation durch die Mobilstation.

3. Verfahren nach Anspruch 1, **dadurch gekennzeichnet, dass** das Verfahren, bevor die Mobilstation die erste Ortungsanforderungsnachricht in der Altsystemzone sendet (S102; S308), ferner umfasst:
Senden eines ersten anfänglichen Ortungscodes auf einer vorab zugewiesenen Ortungsressource durch die Mobilstation, nach der Synchronisation zwischen der Mobilstation und der Altsystemzone, wobei in dem Fall, in dem der erste anfängliche Ortungscode ein spezifizierter Ortungscode ist, ein Direktzugriffsverfahren verwendet wird, um einen zufälligen Ortungscode zu senden; wobei, falls der erste anfängliche Ortungscode ein zufälliger Ortungscode ist, ein Verfahren zur Übertragung auf einem spezifizierten Zeitschlitz verwendet wird, um den zufälligen Ortungscode zu senden; und wobei, falls der erste anfängliche Ortungscode der spezifizierte Ortungscode ist, das Verfahren zur Übertragung auf dem spezifizierten Zeitschlitz verwendet wird, um den spezifizierten Ortungscode zu senden; und
Empfangen einer anfänglichen Ortungsantwortinformation durch die Mobilstation.

4. Verfahren nach Anspruch 2 oder 3, **dadurch gekennzeichnet, dass** das Verfahren, in dem die Mobilstation die erste Ortungsanforderungsinformation in der Altsystemzone sendet, ausgeführt wird durch:
Senden der ersten Ortungsanforderungsnachricht auf der vorab zugewiesenen Ressource in der Altsystemzone durch die Mobilstation; oder Senden der ersten Ortungsanforderungsnachricht gemäß der anfänglichen Ortungsantwortinformation durch die Mobilstation.

5. Verfahren nach Anspruch 1, **dadurch gekennzeichnet, dass** die relevanten Informationen der Zielzone wenigstens eines der Folgenden umfassen:
Ortungsressourceninformationen der Zielzone, Verbindungsinformationen der Zielzone und Parameterinformationen der Zielzone.

6. Verfahren nach Anspruch 5, **dadurch gekennzeichnet, dass** die Ortungsressourceninformation der Zielzone eine konkurrierende Ortungsressource oder eine nicht konkurrierende Ortungsressource ist.

7. Verfahren nach Anspruch 5, **dadurch gekennzeichnet, dass** die Ortungsressourceninformation der Zielzone wenigstens eines der Folgenden umfasst:
einen Zeitparameter, einen Frequenzparameter, einen Subkanalparameter, eine Basisstationskennung, einen Präambelparameter, eine Handover-Kennung der Zielzone und einen Ortungscodeparameter.

8. Verfahren nach Anspruch 5, **dadurch gekennzeichnet, dass** die Verbindungsinformationen der Zielzone wenigstens eines der Folgenden umfassen:
eine Kennung der Mobilstation in der Zielzone, eine Verbindungskennung, Daten, die jeder Verbindungskennung entsprechen, eine vorab zugewiesene Basiskennung der Mobilstation in der Zielzone.

9. Verfahren nach Anspruch 5, **dadurch gekennzeichnet, dass** die Parameterinformationen der Zielzone wenigstens eines der Folgenden umfassen:
Handover-Modus, Handover-Betriebsart, Ressourcenbewahrungskennung, Handover-Anzeigezuweisungskennung, Handover-Optimierungsanzeigeinformation, netzwerkgestützte Handover-Unterstützungsinformationen und Dienstniveau-Vorhersageinformation.

10. Verfahren nach Anspruch 1, **dadurch gekennzeichnet, dass** das Verfahren, nachdem die Mobilstation gemäß den relevanten Informationen auf die Zielzone umschaltet, ferner umfasst:
Senden einer zweiten Ortungsanforderungsnachricht an die Zielzone durch die Mobilstation.

11. Verfahren nach Anspruch 10, **dadurch gekennzeichnet, dass** das Verfahren, bevor die Mobilstation die zweite Ortungsanforderungsnachricht an die Zielzone sendet, ferner umfasst:
nach der Synchronisation zwischen der Mobilstation und der Zielzone Senden eines zweiten anfänglichen Ortungscodes auf einer Ortungsressource, die durch einen Verbindungsbetrieb vorab zugewiesen wurde, durch die Mobilstation, wobei in dem Fall, in dem der zweite anfängliche Ortungscode ein zufälliger Ortungscode ist, ein Direktzugriffsverfahren verwendet wird, um den zufälligen Ortungscode zu senden; falls der zweite anfängliche Ortungscode ein spezifizierter Ortungscode ist, das Direktzugriffsverfahren verwendet wird, um den spezifizierten Ortungscode zu senden; wobei, falls der zweite anfängliche Ortungscode der zufällige Ortungscode ist, ein Verfahren zur Übertragung auf einem spezifizierten Zeitschlitz verwendet wird, um den zufälligen Ortungscode zu senden; und wobei, falls der zweite anfängliche Ortungscode der spezifizierte Ortungscode ist, das Verfahren zur Übertragung auf dem spezifizierten Zeitschlitz verwendet wird, um den spezifizierten Ortungscode zu senden; und
Empfangen einer anfänglichen Ortungsantwortinformation durch die Mobilstation.

12. Verfahren nach Anspruch 11, **dadurch gekennzeichnet, dass** das Verfahren, in dem die Mobilstation die zweite Ortungsanforderungsnachricht an die Zielzone sendet, ausgeführt wird durch:
Senden der zweiten Ortungsanforderungsnachricht auf der vorab zugewiesenen Ressource in der Zielzone durch die Mobilstation; oder
Senden der zweiten Ortungsanforderungsnachricht gemäß eingestellten anfänglichen Ortungsantwortinformationen durch die Mobilstation.

13. Verfahren nach Anspruch 12, **dadurch gekennzeichnet, dass** das Verfahren, nachdem die Mobilstation die zweite Ortungsanforderungsnachricht an die Zielzone sendet, ferner umfasst:
Empfangen der Ortungsantwortnachricht und Erfassen wenigstens einer der Ortungsressourceninformationen, der Einstellparameter und der Erfolgsanzeige der anfänglichen Ortung in der Ortungsantwortnachricht durch die Mobilstation.

14. Verfahren nach Anspruch 1, **dadurch gekennzeichnet, dass** die Mobilstation eine Mobilstation ist, die sowohl das alte Kommunikationsprotokoll als auch das neue Kommunikationsprotokoll unterstützt, wobei die betreuende Station eine Basisstation oder Relaisstation ist, die das alte Kommunikationsprotokoll unterstützt, und die Zielstation eine Basisstation oder Relaisstation ist, die sowohl das alte Kommunikationsprotokoll als auch das neue Kommunikationsprotokoll unterstützt, wobei die Altsystemzone der Zielstation das alte Kommunikationsprotokoll verwendet, um den Dienst für die Mobilstation, die das alte Kommunikationsprotokoll unterstützt, bereitzustellen, und die Zielzone der Zielstation das neue Kommunikationsprotokoll unterstützt.

15. Mobilstation, die konfiguriert ist, um von einer betreuenden Station an eine Zielzone einer Rahmenstruktur einer Zielstation übergeben zu werden, **dadurch gekennzeichnet, dass** die Mobilstation umfasst:
ein erstes Handover-Modul (60), das konfiguriert ist, um die Mobilstation die Übergabe von der betreuenden Station auf eine Altsystemzone einer Rahmenstruktur der Zielstation durchführen zu lassen;
ein Sendemodul (62), das konfiguriert ist, um eine Ortungsanforderungsnachricht an die Altsystemzone zu senden;
ein Empfangsmodul (64), das konfiguriert ist, um eine erste Ortungsanforderungsantwortnachricht zu empfangen und relevante Informationen der Zielzone zu erfassen, die in der ersten Ortungsanforderungsantwortnachricht befördert werden; und
ein zweites Handover-Modul (66), das konfiguriert ist, um die Mobilstation gemäß den relevanten Informationen auf die Zielzone umschalten zu lassen.

## Revendications

1. Méthode de transfert intercellulaire, qui est utilisée pour une station mobile se transférant intercellulairement d'une station de desserte à une zone cible d'un bâti d'une station cible, **caractérisée en ce que** la méthode de transfert intercellulaire comprend :
la station mobile se transférant intercellulairement (S102, S302) de la station de desserte à une zone patrimoniale d'un bâti de la station cible, et envoyant (S102 ; S308) un premier message de demande de télémétrie dans la zone patrimoniale ;
la station mobile recevant (S104 ; S310) un premier message de réponse de demande de télémétrie, et acquérant une information utile de la zone cible portée dans le premier message de réponse de demande de télémétrie ; et
la station mobile se commutant (S106 ; S312) à la zone cible selon l'information utile.

2. Méthode selon la revendication 1, **caractérisée en ce que**, avant que la station mobile envoie (S102 ; S308) le premier message de demande de télémétrie dans la zone patrimoniale, la méthode comprend en outre :
l'acquisition (S508) d'un paramètre de liaison montante après la synchronisation entre la station mobile et la zone patrimoniale, et l'envoi d'un premier code de télémétrie initiale, où, dans le cas où le premier code de télémétrie est un code de télémétrie aléatoire, une méthode d'accès aléatoire est employée pour envoyer le code de télémétrie aléatoire ; et
la station mobile recevant (S510) une information de réponse de télémétrie initiale.

3. Méthode selon la revendication 1, **caractérisée en ce que**, avant que la station mobile envoie (S102 ; S308) le premier message de demande de télémétrie dans la zone patrimoniale, la méthode comprend en outre :
la station mobile envoyant un premier code de télémétrie initiale sur une ressource de télémétrie préallouée après la synchronisation entre la station mobile et la zone patrimoniale, où, dans le cas où le premier code de télémétrie initiale est un code de télémétrie spécifiée, une méthode d'accès aléatoire est employée pour envoyer un code de télémétrie aléatoire ; dans le cas où le premier code de télémétrie initiale est un code de télémétrie aléatoire, une méthode de transmission sur une tranche de temps spécifiée est employée pour envoyer le code de télémétrie aléatoire ; et, dans le cas où le premier code de télémétrie initiale est le code de télémétrie spécifiée, la méthode de transmission sur la tranche de temps spécifiée est employée pour envoyer le code de télémétrie spécifiée ; et
la station mobile recevant une information de réponse de télémétrie initiale.

4. Méthode selon la revendication 2 ou 3, **caractérisée en ce que**, le procédé selon lequel la station mobile envoie la première information de demande de télémétrie dans la zone patrimoniale est réalisé ainsi :
la station mobile envoyant le premier message de demande de télémétrie sur la ressource préallouée dans la zone patrimoniale ; ou la station mobile envoyant le premier message de demande de télémétrie selon l'information de réponse de télémétrie initiale.

5. Méthode selon la revendication 1, **caractérisée en ce que** l'information utile de la zone cible comprend au moins l'un des éléments suivants :
une information de ressource de télémétrie de la zone cible, une information de connexion de la zone cible et une information de paramètre de la zone cible.

6. Méthode selon la revendication 5, **caractérisée en ce que** l'information de ressource de télémétrie de la zone cible est une ressource de télémétrie concurrente ou une ressource de télémétrie non concurrente.

7. Méthode selon la revendication 5, **caractérisée en ce que** l'information de ressource de télémétrie de la zone cible comprend au moins l'un des éléments suivants :
un paramètre de temps, un paramètre de fréquence, un paramètre de sous-canal, un identifiant de station de base, un paramètre de préambule, un identifiant de transfert intercellulaire de la zone cible et un paramètre de code de télémétrie.

8. Méthode selon la revendication 5, **caractérisée en ce que** l'information de connexion de la zone cible comprend au moins l'un des éléments suivants :
un identifiant de la station mobile dans la zone cible, un identifiant de connexion, des données correspondant à chaque identifiant de connexion, et un identifiant de connexion basique préalloué de la station mobile dans la zone cible.

9. Méthode selon la revendication 5, **caractérisée en ce que** l'information de paramètre de la zone cible comprend au moins l'un des éléments suivants :
un mode de transfert intercellulaire, un mode de fonctionnement de transfert intercellulaire, un identifiant de rétention de ressources, un identifiant d'allocation d'indication de transfert intercellulaire, une information d'indication d'optimisation de transfert intercellulaire, une information de support de transfert intercellulaire d'assistant de réseau, et une information de prédiction de niveau de desserte.

10. Méthode selon la revendication 1, **caractérisée en ce que**, après que la station mobile se commute à la zone cible selon l'information utile, la méthode comprend en outre :
la station mobile envoyant un second message de demande de télémétrie à la zone cible.

11. Méthode selon la revendication 10, **caractérisée en ce que**, avant que la station mobile envoie le second message de demande de télémétrie à la zone cible, la méthode comprend en outre :
la station mobile envoyant un second code de télémétrie initiale sur une ressource de télémétrie préallouée par une opération d'association après la synchronisation entre la station mobile et la zone cible, où, dans le cas où le second code de télémétrie initiale est un code de télémétrie aléatoire, une méthode d'accès aléatoire est employée pour envoyer le code de télémétrie aléatoire ; dans le cas où le second code de télémétrie initiale est un code de télémétrie spécifiée, la méthode d'accès aléatoire est employée pour envoyer le code de télémétrie spécifiée ; dans le cas où le second code de télémétrie initiale est le code de télémétrie aléatoire, une méthode de transmission sur une tranche de temps spécifiée est employée pour envoyer le code de télémétrie aléatoire ; et, dans le cas où le second code de télémétrie initiale est le code de télémétrie spécifiée, la méthode de transmission sur la tranche de temps spécifiée est employée pour envoyer le code de télémétrie spécifiée ; et
la station mobile recevant une information de réponse de télémétrie initiale.

12. Méthode selon la revendication 11, **caractérisée en ce que** le procédé selon lequel la station mobile envoie le second message de demande de télémétrie à la zone cible est réalisé ainsi :
la station mobile envoyant le second message de demande de télémétrie sur la ressource préallouée dans la zone cible ; ou
la station mobile envoyant le second message de demande de télémétrie selon une information de réponse de télémétrie initiale ajustée.

13. Méthode selon la revendication 12, **caractérisée en ce que**, après que la station mobile envoie le second message de demande de télémétrie à la zone cible, la méthode comprend en outre :
la station mobile recevant le message de réponse de télémétrie, et acquérant au moins l'un d'une information de ressource de télémétrie, de paramètres d'ajustement et d'une indication de succès de télémétrie initiale dans le message de réponse de télémétrie.

14. Méthode selon la revendication 1, **caractérisée en ce que** la station mobile est une station mobile supportant à la fois un ancien protocole de communication et un nouveau protocole de communication, la station de desserte est une station de base ou une station relais supportant l'ancien protocole de communication, et la station cible est une station de base ou une station relais supportant à la fois l'ancien protocole de communication et le nouveau protocole de communication, où la zone patrimoniale de la station cible utilise l'ancien protocole de communication pour fournir un service à la station mobile supportant l'ancien protocole de communication, et la zone cible de la station cible supporte le nouveau protocole de communication.

15. Station mobile, qui est configurée pour être transférée intercellulairement d'une station de desserte à une zone cible d'un bâti d'une station cible, **caractérisée en ce que** la station mobile comprend :
un premier module de transfert intercellulaire (60), configuré pour amener la station mobile à se transférer intercellulairement de la station de desserte à une zone patrimoniale d'un bâti de la station cible ;
un module d'envoi (62), configuré pour envoyer un premier message de demande de télémétrie à la zone patrimoniale ;
un module de réception (64), configuré pour recevoir un premier message de réponse de demande de télémétrie, et acquérir une information utile de la zone cible portée dans le premier message de réponse de demande de télémétrie ; et
un second module de transfert intercellulaire (66), configuré pour amener la station mobile à se commuter à la zone cible selon l'information utile.
